# EUROPEAN PATENT SPECIFICATION

(11) **EP 2 498 515 B1**
(45) Date of publication and mention of the grant of the patent: **04.11.2015**
(21) Application number: 12171407.5
(22) Date of filing: 15.12.2010
(51) Int. Cl.: H04S 3/00, H04S 5/00, H04R 3/12, H04R 5/02

(54) **Audio apparatus, audio signal transmission method, and audio system**
Audiogerät, Audiosignalübertragungsmethode, sowie Audiosystem
Dispositif audio, méthode de transmission d'un signal audio ainsi qu'un système audio

(30) Priority: 23.12.2009 KR 20090129674
(43) Date of publication of application: 12.09.2012
(62) Divisional of application: 10195275.2
(73) Proprietor: Samsung Electronics Co., Ltd., Suwon-si, Gyeonggi-do, 443-742 (KR)
(72) Inventor: Yoon, Eung-sik, Gyeonggi-do (KR); Kang, Yong-jin, Gyeonggi-do (KR)
(74) Representative: Appleyard Lees

(56) References cited:
- KR-A- 20090 099 669
- US-A1- 2004 234 088
- US-A1- 2009 245 548
- US-B1- 6 487 296

## Description

### CROSS-REFERENCE TO RELATED APPLICATION

This application claims priority from Korean Patent Application No. 10-2009-0129674, filed on December 23, 2009 in the Korean Intellectual Property Office.

### BACKGROUND

### 1. Field

Apparatuses and methods consistent with the exemplary embodiments relate to an audio apparatus, and/or an audio signal transmission method thereof, and/or an audio system, and more particularly, though not exclusively, to an audio apparatus or system which transmits an audio signal received from an external device to a speaker, an audio signal transmission method thereof, and an audio system.

### 2. Description of the Related Art

With the rapid development of multimedia technology, it has been possible for a user to watch a high-definition video and to listen to sound having a loud and rich audio source using various multimedia tools such as a high-definition television (HDTV) or a digital versatile disc (DVD).

Display apparatuses have become thinner to reflect the demand of a user who desires to mount a display apparatus on a wall. Therefore, an external speaker which requires a large volume is provided separately from a display apparatus to be slimmed.

A display apparatus and an audio apparatus are separately provided, and thus the apparatuses require a connection therebetween for data transmission. In a related art, a display apparatus and an audio apparatus are connected to each other through a cable for data transmission. In addition, if the related art audio apparatus supports a 5.1-channel output, the related art audio apparatus transmits data to a separate speaker using a cable.

Cables connecting a display apparatus and an audio apparatus or an audio apparatus and a speaker clutter a space where a user listens to sound. Therefore, it is inconvenient to connect and mount related art apparatuses, and cables connecting the apparatuses spoil the appearance.

An example of wireless connection is shown in US2009/0245548, which discloses an audio apparatus for wirelessly transmitting audio signal, an audio system, and an audio signal transmission method thereof.

### SUMMARY

Exemplary embodiments address at least the above problems and/or disadvantages and other disadvantages not described above. Also, an exemplary embodiment is not required to overcome the disadvantages described above, and an exemplary embodiment may not overcome any of the problems described above.

According to the present invention there is provided apparatus as set forth in the appended claims 1-7. Other features of the invention will be apparent from the dependent claims, and the description which follows.

### BRIEF DESCRIPTION OF THE DRAWINGS

The above and/or other aspects will be more apparent by describing certain exemplary embodiments with reference to the accompanying drawings, in which:
FIG. 1 is a view illustrating an audio system for wirelessly transmitting and receiving an audio signal according to an exemplary embodiment;
FIG. 2 is a block diagram illustrating a television (TV) of an audio system according to an exemplary embodiment;
FIG. 3 is a block diagram illustrating a sound bar of an audio system according to an exemplary embodiment;
FIG. 4 is a block diagram illustrating a rear speaker of an audio system according to an exemplary embodiment;
FIG. 5 is a block diagram illustrating a subwoofer speaker of an audio system according to an exemplary embodiment;
FIG. 6 is a view provided to explain time division multiplexing for a radio communication according to an exemplary embodiment; and
FIG. 7 is a flowchart provided to explain a method of a sound bar wirelessly transmitting and receiving an audio signal according to an exemplary embodiment.

### DETAILED DESCRIPTION OF EXEMPLARY EMBODIMENTS

Certain exemplary embodiments will now be described in greater detail with reference to the accompanying drawings. In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the invention with unnecessary detail. Expressions such as "at least one of," when preceding a list of elements, modify the entire list of elements and do not modify the individual elements of the list.

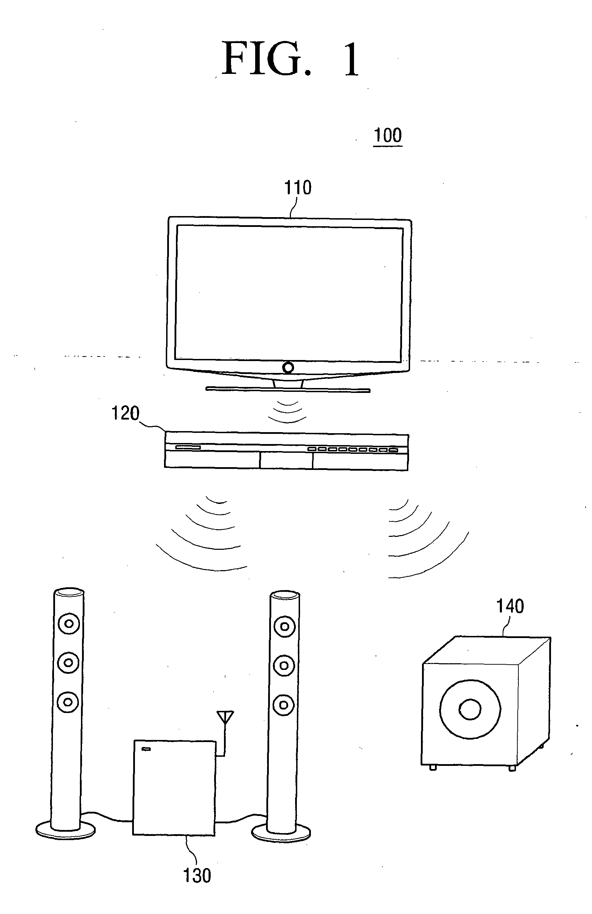

FIG. 1 is a view illustrating an audio system 100 for wirelessly transmitting and receiving an audio signal according to an exemplary embodiment. The audio system 100 provides a user with a 5.1-channel audio signal. A 5.1-channel sound system may include a system body which supports a digital theater system (DTS) and a Dolby system, and 5.1-channel speakers which include a left-front speaker, a center speaker, a right-front speaker, a left-rear speaker, a right-rear speaker, and a subwoofer. It is understood that other exemplary embodiments are not limited to the audio system 100 providing a user with a 5.1 channel audio signal. For example, in another exemplary embodiment, the audio system 100 provides a user with a 1 channel audio signal (i.e., mono signal), a 2 channel audio signal, a 7.1 channel audio signal,

As shown in FIG. 1, the audio system 100 includes a TV 110, a sound bar 120 which is an audio apparatus, a rear speaker unit 130, and a subwoofer speaker unit 140. The sound bar 120 is an audio apparatus which is separated from a display apparatus, and operates to process an audio signal of the display apparatus and to output audio. According to the present exemplary embodiment, the center speaker and the front speakers (not shown) are mounted in the sound bar 120.

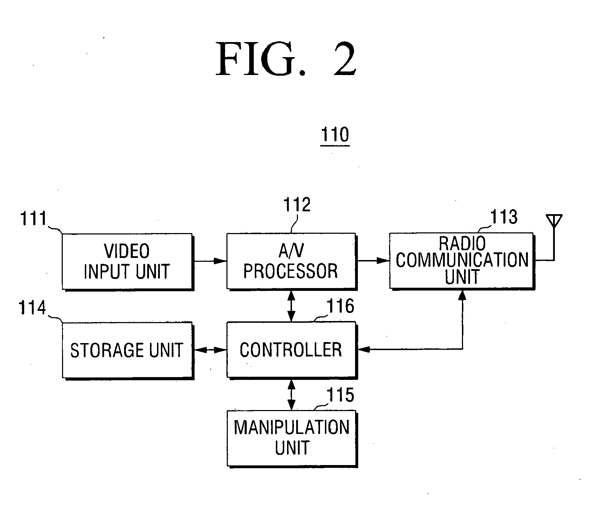

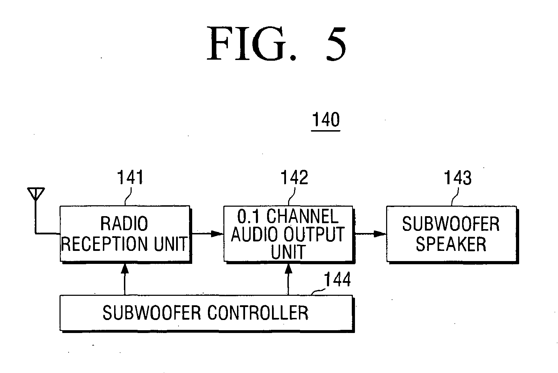

Hereinbelow, overall operations of the audio system 100 will be explained, and the TV 110, the sound bar 120, the rear speaker unit 130, and the subwoofer speaker unit 140 will be explained later in detail with reference to FIGs. 2 and 5.

The TV 110 receives a broadcast signal from a broadcast station or a satellite over wire or wirelessly, or receives a video signal from a device connected thereto. The TV 110 processes the received broadcast signal or video signal, and extracts an audio signal from the received signal. The TV 110 wirelessly transmits the extracted audio signal to the sound bar 120. The transmitted audio signal may be a stereo channel audio signal.

The sound bar 120 operates as a master speaker which processes an audio signal transmitted from the TV 110, and then outputs and distributes the transmitted audio signal. That is, the sound bar 120 processes the audio signal transmitted from the TV 110 to be a multi channel audio signal, transmits some of the processed audio signal to a slave speaker device (for example, rear speakers and a subwoofer speaker), and outputs the other audio signals.

For example, if the sound bar 120 receives a stereo channel audio signal, the sound bar 120 converts the stereo channel audio signal into a 5.1-channel audio signal, and then processes the converted 5.1-channel audio signal. The sound bar 120 separates the converted 5.1-channel audio signal into audio signals for each channel.

The sound bar 120 wirelessly transmits rear channel audio signals of the separated audio signals to the rear speaker unit 130. The rear speaker unit 130 separates the wirelessly received rear channel audio signals into a right-rear channel audio signal and a left-rear channel audio signal. However, it is understood that all exemplary embodiments are not limited thereto, and the rear speaker unit 130 may separately receive the right-rear channel audio signal and a left-rear channel audio signal according to another exemplary embodiment. The rear speaker unit 130 amplifies the separated right-rear channel audio signal and left-rear channel audio signal, and transmits the amplified signals to the left-rear speaker and the right-rear speaker, respectively. Therefore, the right-rear channel audio signal is output to the right-rear speaker, and the left-rear channel audio signal is output to the left-rear speaker.

The sound bar 120 wirelessly transmits the subwoofer channel audio signal of the separated audio signals to the subwoofer speaker unit 140. The subwoofer speaker unit 140 outputs the wirelessly received subwoofer channel audio signal.
That is, the right-front channel audio signal is output to the right-front speaker which is mounted in the sound bar 120, the left-front channel audio signal is output to the left-front speaker which is mounted in the sound bar 120, and the center channel audio signal is also output to the center speaker which is mounted in the sound bar 120.

The sound bar 120 wirelessly receives an audio signal from the TV 110, and wirelessly transmits the audio signals to the rear speaker unit 130, and the subwoofer speaker unit 140 through a single radio transceiver unit. In this situation, as the sound bar 120 wirelessly communicates with a plurality of external devices, radio frequency interference may occur, thereby preventing a user from listening to audio of desired quality.

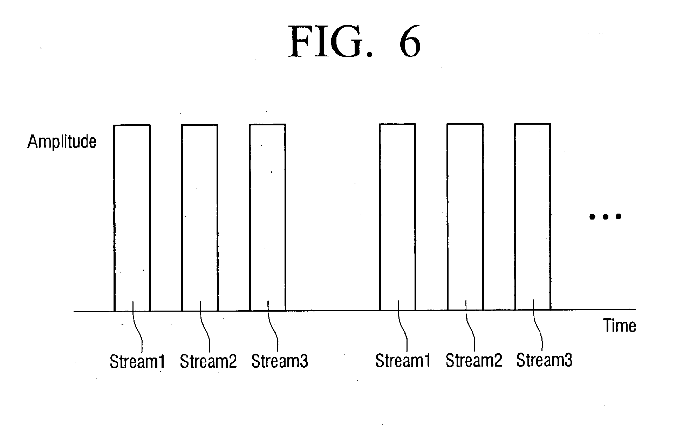

According to an exemplary embodiment, the sound bar 120 transmits a plurality of audio signals using time division multiplexing so that radio frequency interference is minimized. The time division multiplexing will be explained with reference to FIG. 6.

FIG. 6 is a graph provided to explain an audio signal transmission method using time division multiplexing according to an exemplary embodiment. In the time division multiplexing, the time domain is divided into several timeslots, and the time slots are sequentially distributed to a plurality of radio channels.

In the present disclosure, the TV 110 and the sound bar 120 use a radio channel which is referred to as Stream 1, the sound bar 120 and the rear speaker unit 130 use a radio channel which is referred to as Stream 2, and the sound bar 120 and the subwoofer speaker unit 140 use a radio channel which is referred to as Stream 3.

The data transmission time is divided into predetermined time slots as shown in FIG. 6. Stream 1 is transmitted first, Stream 2 is transmitted subsequent to Stream 1, and then Stream 3 is transmitted and the process repeats itself (i.e., Stream 1 is transmitted again, and so on). That is, Stream 1, Stream 2, and Stream 3 are repeatedly transmitted in that order by predetermined time slots. Therefore, even if the sound bar 120 transmits and receives data through a plurality of radio channels, the radio channels are not overlapped. Accordingly, the sound bar 120 may eliminate the radio frequency interference.

As described above, the sound bar 120 wirelessly transceives an audio signal to and from the TV 110, the rear speaker unit 130, and the subwoofer speaker unit 140. Therefore, a user may convert a stereo channel audio output of the TV 110 into a 5.1-channel audio output, and listen to the audio using the sound bar 120 without using an additional wired cable.

FIG. 2 is a block diagram illustrating the TV 110 of the audio system 100 according to an exemplary embodiment. Referring to FIG. 2, the TV 110 includes a video input unit 111, an audio/video (A/V) processor 112, a radio communication unit 113, a storage unit 114, a manipulation unit 115, and a controller 116.

The video input unit 111 is connected to an external device (for example, a DVD player), and receives a video signal.
and video scaling on the video data. An audio processor processes the audio data to be transmitted to the sound bar 120, and transmits the processed audio data to the radio communication unit 113. As an example, the audio signal may be an audio signal of a stereo channel type.

The radio communication unit 113 selects a modulation scheme according to a control signal of the controller 116, and transmits the signal-processed audio signal to the sound bar 120. The radio communication unit 113 may be mounted in the TV 110, or may be a dongle (e.g., a universal serial bus dongle) for radio communication with the sound bar.

The storage unit 114 stores a video received from the video input unit 111. The storage unit 114 may be implemented as a volatile memory (such as RAM, etc.) or a non-volatile memory (such as a hard disc drive, flash memory, ROM, etc.).

The manipulation unit 115 receives an input from a user, and transmits the input to the controller 116. The manipulation unit 115 may be implemented using at least one of a remote controller, a pointing device, a touch pad, a touch screen, etc.

The controller 116 controls overall operations of the TV 110. To be more specific, the controller 116 recognizes a user's command based on the input transmitted from the manipulation unit 115, and controls overall operations of the TV 110 according to the user's command. The controller 116 controls the A/V processor 112 to separately process the video data and audio data input through the video input unit 111. To transmit the processed audio signal to the sound bar 120, the controller 116 generates a control signal to select a modulation scheme, and transmits the generated control signal to the radio communication unit 113.

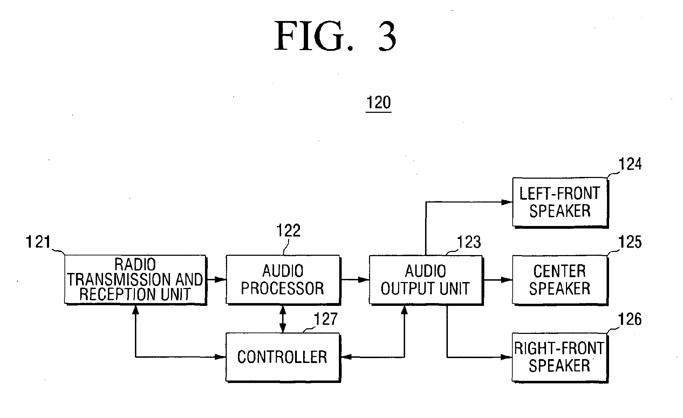

FIG. 3 is a block diagram illustrating the sound bar 120 of the audio system 100 according to an exemplary embodiment. Referring to FIG. 3, the sound bar 120 includes a radio transmission and reception unit 121, an audio processor 122, an audio output unit 123, a left-front speaker 124, a center speaker 125, a right-front speaker 126, and a controller 127.

The radio transmission and reception unit 121 wirelessly receives a stereo channel audio signal from the TV 110. The radio transmission and reception unit 121 transmits the received stereo channel audio signal to the audio processor 122.

The radio transmission and reception unit 121 wirelessly transmits to the rear speaker unit 130 a rear channel audio signal which is processed by the audio processor 122 to be separated. Furthermore, the radio transmission and reception unit 121 wirelessly transmits an audio signal of a subwoofer channel to the subwoofer speaker unit 140. Alternatively, the radio transmission and reception unit 121 may be implemented to transmit a right-rear channel audio signal and a left-rear channel audio signal to the rear speaker unit 130, and to transmit a subwoofer channel audio signal to the subwoofer speaker unit 140.

When the sound bar 120 wirelessly communicates with the plurality of external devices

The audio processor 122 decodes a stereo channel audio signal which is received through the radio transmission and reception unit 121. The audio processor 122 converts the decoded stereo channel audio signal into, for example, a 5.1-channel audio signal, and then processes the converted signal.

The audio processor 122 separates the decoded 5.1-channel audio signal into an audio signal which will be output to the speaker mounted in the sound bar 120 and an audio signal which will be wirelessly transmitted. Among the separated audio signals, the audio processor 122 transmits a 3-channel audio signal to be output through the speaker mounted in the sound bar 120 to the audio output unit 123. Herein, the 3-channel audio signal uses a right-front channel, a left-front channel, and a center channel. The audio processor 122 transmits a 2.1-channel audio signal to be wirelessly transmitted to the external speaker to the radio transmission and reception unit 121. Herein, the 2.1-channel audio signal uses a right-rear channel, a left-rear channel, and a subwoofer channel.

The audio output unit 123 receives the 3-channel audio signal from the audio processor 122. The audio output unit 123 converts the received audio signal into a format in which an audio signal is capable of being output through a speaker.

Specifically, the audio output unit 123 converts the 3-channel audio signal separated by the audio processor 122 into a pulse width modulation (PWM) signal using a pulse width modulation integrated circuit (PWM IC) mounted therein, and switches the converted PWM signal to extract a left-front channel audio signal, a center channel audio signal, and a right-front channel audio signal.

The audio output unit 123 transfers the extracted audio signal to each of the speakers mounted in the sound bar 120. In more detail, the audio output unit 123 transfers the left-front channel audio signal to the left-front speaker 124, the center channel audio signal to the center speaker 125, and the right-front channel audio signal to the right-front speaker 126.

The radio transmission and reception unit 121 wirelessly transmits the received 2.1-channel audio signal to the rear speaker unit 130 and the subwoofer speaker unit 140.

The controller 127 controls overall operations of the sound bar 120. Specifically, the controller 127 controls the radio transmission and reception unit 121, the audio processor 122, and the audio output unit 123 to provide a user with a 5.1-channel audio signal. Furthermore, the controller 127 controls the audio processor 122 to convert the stereo channel audio signal transmitted to the radio transmission and reception unit 121 into a 5.1-channel audio signal. Also, the controller 127 controls the audio processor 122 to extract an audio signal of a subwoofer channel and an audio signal of a 2.1-channel of a rear channel from the 5.1-channel audio signal.

The controller 127 controls the audio output unit 123 to transmit the subwoofer channel audio signal and the rear channel audio signal separated bv the audio processor 122 to the and the right-front channel audio signal to the left-front speaker 124, the center speaker 125, and the right-front speaker 126, respectively.

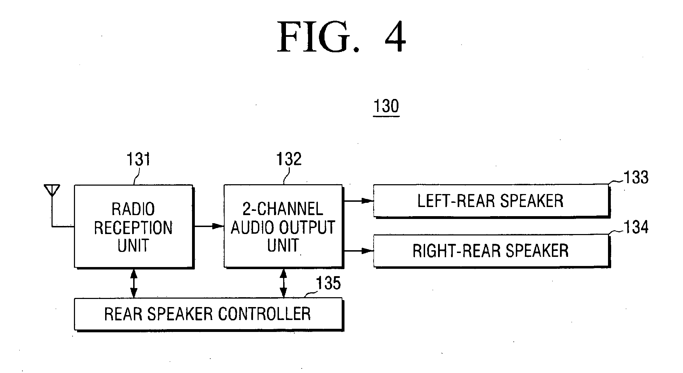

FIG. 4 is a block diagram illustrating the rear speaker unit 130 of the audio system 100 according to an exemplary embodiment. Referring to FIG. 4, the rear speaker unit 130 includes a radio reception unit 131, a 2-channel audio output unit 132, a left-rear speaker 133, a right-rear speaker 134, and a rear speaker controller 135.

The radio reception unit 131 wirelessly receives an audio signal from the radio transmission and reception unit 121 of the sound bar 120. The audio signal wirelessly transmitted from the radio transmission and reception unit 121 is a rear channel audio signal. The audio signal wirelessly transmitted from the radio transmission and reception unit 121 may include only a rear channel audio signal, or may also include both a subwoofer channel audio signal and a rear channel audio signal. In the instant exemplary embodiment, the audio signal includes only a rear channel audio signal for convenience of description.

The radio reception unit 131 transfers a wirelessly received audio signal to the 2-channel audio output unit 132.

The 2-channel audio output unit 132 receives the audio signal from the radio reception unit 131, separates the received audio signal into a left-rear channel audio signal and a right-rear channel audio signal, and processes the separated audio signals.

The 2-channel audio output unit 132 amplifies the separated left-rear channel audio signal and right-rear channel audio signal, and transfers the amplified audio signals to the left-rear speaker 133 and the right-rear speaker 134, respectively.

The left-rear speaker 133 outputs a left-rear channel audio signal. The right-rear speaker 134 outputs a right-rear channel audio signal.

The rear speaker controller 135 controls overall operations of the rear speaker unit 130. Specifically, the rear speaker controller 135 controls the 2-channel audio output unit 132 to amplify the received audio signal. Furthermore, the rear speaker controller 135 controls the 2-channel audio output unit 132 to separate the rear channel audio signals into a left-rear channel audio signal and a right-rear channel audio signal.

FIG. 5 is a block diagram illustrating the subwoofer speaker unit 140 of the audio system 100 according to an exemplary embodiment. In the instant exemplary embodiment, the subwoofer speaker unit 140 is provided to play back audio, in which a separate channel is used for low sound.

Referring to FIG. 5, the subwoofer speaker unit 140 includes a radio reception unit 141, a 0.1 channel audio output unit 142, a subwoofer speaker 143, and a subwoofer controller 144.

The radio reception unit 141 wirelessly receives an audio signal from the radio transmission and reception unit 121 of the sound bar 120. Herein, the audio signal wirelessly

The radio reception unit 141 transfers the wirelessly received audio signal to the 0.1 channel audio output unit 142.

The 0.1 channel audio output unit 142 amplifies the received subwoofer channel audio signal, and transmits the amplified audio signal to the subwoofer speaker 143. Then, the subwoofer speaker 143 outputs the subwoofer audio signal of 0.1 channel where low sound has been collected separately.

The subwoofer controller 144 controls overall operations of the subwoofer speaker unit 140. To be more specific, the subwoofer controller 144 controls the radio reception unit 141 to have an identification (ID) matching with an ID of the radio transmission and reception unit 121 of the sound bar 120. Furthermore, the subwoofer controller 144 controls the 0.1-channel audio output unit 142 to amplify and output the received audio signal.

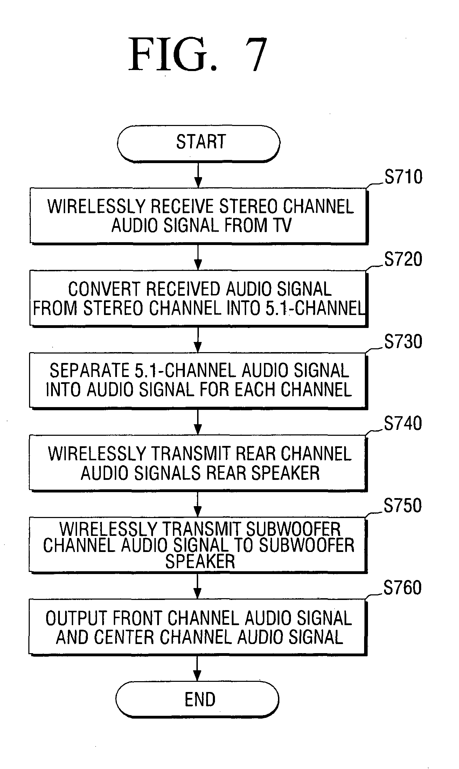

FIG. 7 is a flowchart provided to explain a method of a sound bar 120 wirelessly transmitting and receiving an audio signal according to an exemplary embodiment. Referring to FIG. 7, the sound bar 120 wirelessly receives a stereo channel audio signal from the TV 110 (S710).

If the sound bar 120 wirelessly receives an audio signal from the TV 110, the sound bar 120 processes the received audio signal to be converted into an audio signal of a 5.1-channel (S720).

The sound bar 120 separates the converted 5.1-channel audio signal into an audio signal for each channel (S730). This is for the sound bar 120 to output a part of the converted 5.1-channel audio signal itself, and to wirelessly transmit the other part to an external wireless speaker. Therefore, the sound bar 120 separates the 5.1-channel audio signal into the right-front channel audio signal, the left-front channel audio signal, and the center channel audio signal to be output by the sound bar 120, and the subwoofer channel audio signal and the rear channel audio signals to be wirelessly transmitted to an external speaker.

The sound bar 120 wirelessly transmits the rear channel audio signals from among the separated audio signals to the rear speaker unit 130 (S740). Herein, the rear channel audio signals transmitted to the rear speaker unit 130 are separated into the right-rear channel audio signal and the left-rear channel audio signal, and then amplified. The amplified audio signals are output to the left-rear speaker and the right-rear speaker, respectively.

The sound bar 120 wirelessly transmits the subwoofer channel audio signal among the separated audio signals to the subwoofer speaker unit 140 (S750). The subwoofer channel audio signal wirelessly transmitted to the subwoofer speaker unit 140 is output to the subwoofer speaker 143.

Among the separated audio signals, the sound bar 120 outputs the right-front channel audio signal, the left-front channel audio signal, and the center channel audio signal itself (S760). That is, the right-front channel audio signal is output to the right-front speaker channel speaker mounted in the sound bar 120, and the center channel audio signal is output to the center speaker mounted in the sound bar 120.

If the audio signals are wirelessly transmitted and received through the above operations, a user may listen to 5.1-channel audio through the sound bar 120 without using an additional cable instead of the stereo channel audio of the TV 110.

While the TV 110 is provided as the external device in the above-described exemplary embodiments, it is understood that the TV 110 is merely exemplary for convenience of description. That is, it is understood that aspects of the exemplary embodiments may be applied to any device which wirelessly provides an audio signal. For instance, the first external device may be embodied using a wall-mounted display device, a computer, and an MPEG layer 3 (MP3) player.

Furthermore, while the sound bar 120 is provided as an audio device in the above-described exemplary embodiments, it is understood that the sound bar 120 is merely exemplary for convenience of description. That is, aspects of the exemplary embodiments may be applied to any device which wirelessly provides a multi channel audio signal. For instance, the audio device may be a home theater or a wall-mounted sound bar.

Also, while the above-described audio device is used to provide a 5.1-channel audio signal, it is understood that this is merely exemplary. That is, aspects of the exemplary embodiments may be applied to any audio device which provides a multi-channel audio signal, such as a 6.1 channel or a 7.1 channel audio system.

Moreover, while in the above-described exemplary embodiments, an audio signal of a 2.1 channel having a subwoofer channel and rear channels is wirelessly transmitted, it is understood that this is merely exemplary for convenience of description. That is, another exemplary embodiment may be implemented to wirelessly transmit an audio signal of at least one of rear channels, front channels, and a subwoofer channel.

As described above, according to exemplary embodiments, an audio device wirelessly communicates with a plurality of external devices, and thus a user may connect the audio device to the plurality of external devices without using cables.

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, audio system 100 can include a processor or microprocessor executing a computer program stored in a computer-readable medium.

The foregoing exemplary embodiments and advantages are merely exemplary and are not to be construed as limiting the present invention. The scope of the invention is defined by the claims that follow.

## Claims

1. An audio apparatus (120), **characterised by**:
a transmission and reception unit (121) which is arranged to wirelessly receive via a first radio communication a stereo channel audio signal from a first external device (110);
an audio signal processor (122) which is arranged to convert the received stereo channel audio signal into multi-channel audio signals; and
a controller (127) which is arranged to control the transmission and reception unit (121) to wirelessly transmit via a second radio communication a first audio signal of the multi-channel audio signals to a second external device (130, 140);
whereby said first radio communication between the audio apparatus (120) and the first external device (110) and said second radio communication between the audio apparatus (120) and the at least one second external device (130, 140) employs time division multiplexing which synchronizes the time when a radio signal corresponding to said first and second radio communication is output using time slots sequentially distributed to a plurality of radio channels.

2. The audio apparatus (120) as claimed in claim 1, wherein:
the audio signal processor (122) is arranged to convert the received stereo channel audio signal into a 5.1-channel audio signal, or a 6.1 channel audio signal, a 7.1 channel audio signal, or a 7.2 channel audio signal.

3. The audio apparatus (120) as claimed in claim 1, wherein the first external device (110) is at least one of a television (TV), a computer, and an MPEG layer 3 (MP3) player.

4. The audio apparatus (120) as claimed in claim 1, wherein the first external device (110) comprises a display screen to display images.

5. The audio apparatus (120) as claimed in claim 1, wherein the audio apparatus is a sound bar.

6. The audio apparatus (120) as claimed in claim 5, wherein the sound bar is a wall-mountable type audio apparatus.

7. The audio apparatus (120) as claimed in claim 1, wherein the transmission and reception unit (121) is arranged to wirelessly stream the audio data from the first external device (110).

## Patentansprüche

1. Audiovorrichtung (120), die durch Folgendes gekennzeichnet ist:
eine Sende- und Empfangseinheit (121), die dafür ausgelegt ist, drahtlos ein Stereokanal-Audiosignal von einem ersten externen Gerät (110) über eine erste Funkkommunikation zu empfangen;
einen Audiosignal-Prozessor (122), der dafür ausgelegt ist, das empfangene Stereokanal-Audiosignal in Mehrkanal-Audiosignale umzuwandeln; und
eine Steuerung (127), die dafür ausgelegt ist, die Sende- und Empfangseinheit (121) zu steuern, ein erstes Audiosignal der Mehrkanal-Audiosignale über eine zweite Funkkommunikation an ein zweites externes Gerät (130; 140) zu senden;
wobei die erste Funkkommunikation zwischen der Audiovorrichtung (120) und dem ersten externen Gerät (110) und die zweite Funkkommunikation zwischen der Audiovorrichtung (120) und dem mindestens einem zweiten externen Gerät (130, 140) Zeitschlitzmultiplex anwendet, das die Zeit synchronisiert, wenn ein Funksignal, das der ersten und zweiten Funkkommunikation entspricht, unter Verwendung von sequentiell auf mehrere Funkkanäle verteilte Zeitschlitze ausgegeben wird.

2. Audiovorrichtung (120) nach Anspruch 1, wobei:
der Audiosignal-Prozessor (122) dafür ausgelegt ist, das empfangene Stereokanal-Audiosignal in ein 5.1-Kanal-Audiosignal oder ein 6.1-Kanal-Audiosignal, ein 7.1-Kanal-Audiosignal oder ein 7.2-Kanal-Audiosignal umzuwandeln.

3. Audiovorrichtung (120) nach Anspruch 1, wobei das erste externe Gerät (110) ein Fernsehgerät (TV) und/oder ein Computer und/oder ein MPEG-Schicht 3-(MP3)-Spieler ist.

4. Audiovorrichtung (120) nach Anspruch 1, wobei das erste externe Gerät (110) einen Anzeigebildschirm umfasst, um Bilder anzuzeigen.

5. Audiovorrichtung (120) nach Anspruch 1, wobei die Audiovorrichtung eine Soundbar ist.

6. Audiovorrichtung (120) nach Anspruch 5, wobei die Soundbar eine Audiovorrichtung wandmontierbaren Typs ist.

7. Audiovorrichtung (120) nach Anspruch 1, wobei die Sende- und Empfangseinheit (121) dafür ausgelegt ist, die Audiodaten drahtlos von dem ersten externen Gerät (110) zu streamen.

## Revendications

1. Appareil audio (120), **caractérisé par**
une unité de transmission et de réception (121) prévue pour recevoir sans fil, par le biais d'une première communication radio, un signal audio à canal stéréo provenant d'un premier dispositif extérieur (110) ;
un processeur de signal audio (122) prévu pour convertir le signal audio à canal stéréo reçu en signaux audio multicanaux ; et
un dispositif de commande (127) prévu pour commander l'unité de transmission et de réception (121) de manière à ce qu'elle transmette sans fil, par le biais d'une deuxième communication radio, un premier signal audio des signaux audio multicanaux à un deuxième dispositif extérieur (130, 140) ;
ladite première communication radio entre l'appareil audio (120) et le premier dispositif extérieur (110) et ladite deuxième communication radio entre l'appareil audio (120) et l'au moins un deuxième dispositif extérieur (130, 140) utilisant un multiplexage à répartition dans le temps qui synchronise le temps pendant lequel un signal radio correspondant auxdites première et deuxième communications radio est fourni en sortie en utilisant des créneaux temporels répartis séquentiellement en une pluralité de canaux radio.

2. Appareil audio (120) selon la revendication 1, dans lequel :
le processeur de signal audio (122) est prévu pour convertir le signal audio à canal stéréo reçu en un signal audio à canal 5.1, ou un signal audio à canal 6.1, un signal audio à canal 7.1, ou un signal audio à canal 7.2.

3. Appareil audio (120) selon la revendication 1, dans lequel le premier dispositif extérieur (110) est au moins l'un parmi une télévision (TV), un ordinateur, et un lecteur MPEG de couche 3 (MP3).

4. Appareil audio (120) selon la revendication 1, dans lequel le premier dispositif extérieur (110) comprend un écran d'affichage pour afficher des images.

5. Appareil audio (120) selon la revendication 1, dans lequel l'appareil audio est une barre audio.

6. Appareil audio (120) selon la revendication 5, dans lequel la barre audio est un appareil audio de type pouvant être fixé au mur.

7. Appareil audio (120) selon la revendication 1, dans lequel l'unité de transmission et de réception (121) est prévue pour diffuser sans fil les données audio à partir du premier dispositif extérieur (110).
